# EUROPÄISCHE PATENTANMELDUNG

(11) **EP 1 154 096 A2**
(43) Veröffentlichungstag der Anmeldung: **14.11.2001**
(21) Anmeldenummer: 01109434.9
(22) Anmeldetag: 23.04.2001
(51) Int. Cl.: E04F 11/16, B44C 5/04

(54) **Treppenstufe mit Dämpfungsschicht**

(30) Priorität: 12.05.2000 DE 10023406
(71) Anmelder: Profiform Möbelfronten GmbH & Co., 33415 Verl (DE)
(72) Erfinder: Zaher, Maximilian, 26125 Oldenburg (DE); Deppe, Arnold, 33415 Verl (DE)
(74) Vertreter: von Hellfeld, Axel, Dr. Dipl.-Phys.

(57) **Zusammenfassung**

Die Treppenstufe weist einen Körper (10) aus Holz oder ein Holzwerkstoff auf mit einer Schicht (12, 14, 16) aus im wesentlichen Holzmehl und Polyolefin.

## Beschreibung

Die Erfindung hat das Ziel, Treppenstufen bereitzustellen, die kostengünstig herstellbar sind, einen ansprechenden ästhetischen Eindruck machen, möglichst ähnlich einem hochwertigen Holz, und gute mechanische Gebrauchseigenschaft haben, insbesondere dämpfend wirken, sowie eine gute Schlag- und Kratzfestigkeit aufweisen.

Die Verwendung von hochwertigen Hölzern für Treppenstufen ist nicht nur teuer, sondern verbraucht auch hochwertige Holz-Resourcen. Auch insoweit will die Erfindung Abhilfe schaffen und ein Produkt schaffen, das nach seiner Verwendung relativ leicht wieder "recyclebar" ist.

Hierzu schlägt die Erfindung eine Treppenstufe vor, die einen Körper aus Holz oder einem Holzwerkstoff aufweist, mit einer Beschichtung aus einer Folie, die im wesentlichen aus Holzmehl und Polyolefin besteht. Bevorzugt wird in der Folie ein Holzmehlanteil von 50 bis 80 Vol.-% gewählt.

Bei dem Polyolefin handelt es sich bevorzugt um ein Polypropylen oder ein Polyethylen.

Die auf den Körper der Treppenstufe aufgetragene Folie wird vorab (d.h. vor dem Aufbringen auf die Treppenstufe) bevorzugt farbig dekoriert, d.h. mit einem Farbdekor versehen.

Über die Farbdekorschicht kann eine Lackschicht aufgetragen werden. Der Auftrag der Lackschicht erfolgt bevorzugt auch vorab auf die Folie (mit Farbdekor) als solche, d.h. vor dem Aufbringen der Folie auf den Treppenstufenkörper. Somit kann die Folie einschließlich Farbdekor und Lack als für sich handhabbares Produkt an den Hersteller der Treppenstufe geliefert werden und dieser braucht keine aufwendigen Anlagen für die Farbdekorierung und/oder Lackierung der Treppenstufen.

Bevorzugt wird ein Lack verwendet, der durch Strahlung härtbar ist, insbesondere durch UV-Strahlung.

Die erfindungsgemäß verwendete Folie aus im wesentlichen Holzmehl und Polyolefin ermöglicht insbesondere den Einsatz von Spanplatten als Material für den Körper der Treppenstufe. Dabei sind bevorzugt mehrere Lagen Spanplatten horizontal (bezogen auf den Einbauzustand der Treppe) übereinander geschichtet und durch einen Kleber verbunden. Bevorzugt sind die Kleberschichten zwischen den einzelnen Holzwerkstofflagen faserverstärkt, z.B. mit Glasfasern.

Die erfindungsgemäß verwendete Folie hat den Vorteil, daß sich bei Verwendung kostengünstiger Spanplatten deren Oberflächenstruktur nicht nach außen "durchdrückt".

Die Strahlungshärtung des Lackes kann sowohl vorab direkt auf der Folie als auch bevorzugt nach dem Aufbringen der Folie auf die Treppenstufe erfolgen.

Bei der Herstellung der Folie wird eine Schmelze aus im wesentlichen Polyolefin mit einer Temperatur von 150°C bis 210°C hergestellt und darin Holzmehl eingemischt, mit einem Anteil von 50 bis 80 Vol.-%, bezogen auf das Endprodukt.

Die Verwendung von Holzmehl (also Sägemehl) bedeutet eine wesentliche Kostenersparnis und auch eine Vereinfachung des Herstellungsprozesses im Vergleich zu der Verwendung von Faserstoffen.

Die Folie kann aus der Schmelze in an sich bekannter Weise extrudiert werden.

Die so hergestellte und gegebenenfalls bereits abgekühlte Folie läßt sich dadurch besonders gut mit einem Farbdekor beschichten, daß sie auf Temperaturen im Bereich von 130°C bis 150°C erhitzt wird. Bei dieser Temperatur läßt sich ein Farbdekor festhaftend aufbringen. Bevorzugt erfolgt das Aufbringen des Farbdekors mit der sog. "Release"-Technik, die als solche bekannt ist (vgl. insbesondere EP 0 573 676 A1). Als flächige Träger mit "Release"-Eigenschaft kommen insbesondere in Betracht bestimmte Papiere und auch Kunststoffolien, die an ihrer Oberfläche so gestaltet bzw. präpariert sind, daß unter bestimmten Bedingungen aufgetragene Farbschichten oder Lackschichten in der Art eines "Abpellens" (wie ein Abziehbild) auf ein Substrat (hier die Folie) übertragbar sind. Für die hier vorliegende Erfindung kommen insbesondere als Träger mit "Release"-Eigenschaft Kunststoffolien, wie insbesondere Polyester-Folien, in Betracht, die eine geeignete Trennschicht aufweisen, um die "Release"-(Abpell)-Eigenschaft zu erreichen.

Bevorzugt wird erfindungsgemäß das Farbdekor mit der "Release"-Technik auf die Folie aufgebracht und zwar besonders bevorzugt bei der genannten Temperatur von 130°C bis 150°C.

Über das Farbdekor kann dann eine härtbare Lackschicht aufgetragen werden, z. B. mittels einer Walze. Danach wird der Lack gehärtet, bevorzugt mittels UV-Strahlung.

Die Erfindung lehrt auch ein Verfahren zum Aufbringen einer Folie der vorstehend beschriebenen Art auf einen Körper, wobei der Körper insbesondere und bevorzugt aus Holz oder einem Holzwerkstoff besteht, insbesondere Spanplatte. Bei diesem Verfahren wird die Folie unter Erwärmung durch eine Druckdifferenz gegen den Körper gedrückt und so fest mit diesem verbunden. Dabei ist der Körper zuvor bevorzugt mit einem Schmelzkleber beschichtet worden. Die Druckdifferenz wird bevorzugt dadurch erreicht, daß auf der Unterseite der aufzutragenden Folie ein Unterdruck (Vakuum) erzeugt wird, so daß der über der Folie liegende Luftdruck die Folie gegen den Körper drückt. Die Elastizität und Plastizität der Folie unter Erwärmung ermöglicht ein Anpassen der aufgebrachten Folie an 3-dimensionale Strukturen des Körpers.

Es ist auch möglich, die Folie mit einer Membran-Presse auf den Treppenkörper aufzubringen. Die Membran der Membran-Presse drückt die Folie gegen den Treppenkörper. Dabei kann die erforderliche Druckdifferenz oberhalb der Membran und/oder unterhalb der Membran (letzteres durch Unterdruck) erzeugt werden.

Für optimale Dämpfungseingenschaften eignen sich besonders Folien mit Stärken im Bereich von 1 bis 4 mm auf der Treppenstufe. Die Folie wird zumindest im eigentlichen Trittbereich der Stufe und auf der Treppen-Vorderkante verwendet.

Nachfolgend wird ein Ausführungsbeispiel der Erfindung mit Blick auf die Zeichnungen beschrieben. Es zeigt:
- Figur 1: schematisch eine Folie aus Holzmehl und Polyolefin mit einer Farbdekorschicht und einer Lackschicht;
- Figur 2: schematisch eine Vorrichtung zum Aufbringen eines Farbdekors und einer Lackschicht auf eine Folie;
- Fig. 3: schematisch einen Schnitt durch einen Treppenstufe mit aufgebrachter Folie; und
- Figur 4: schematisch eine Vorrichtung zum Aufbringen einer Folie auf einen zu beschichtenden und zu dekorierenden Körper.

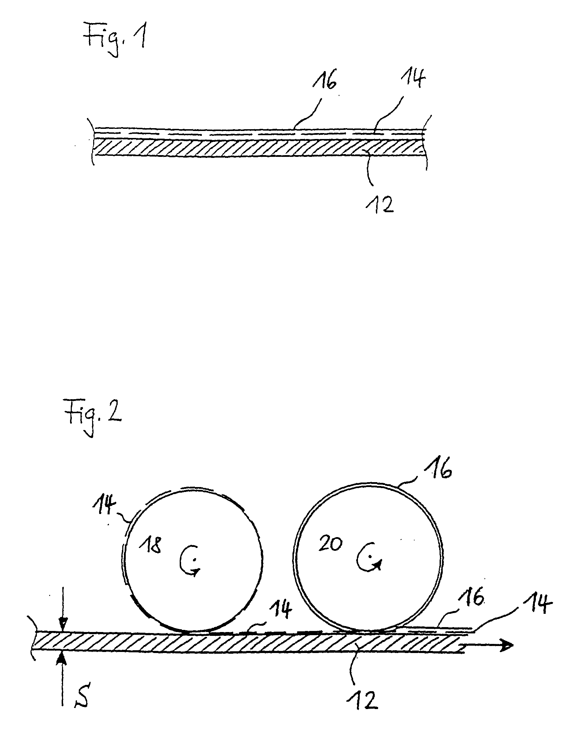

Figur 1 zeigt eine Folie 12, die zu 50 bis 80 Vol.-% aus Holzmehl besteht, während der Rest im wesentlichen von einem oder verschiedenen Polyolefinen gebildet wird. Als Polyolefin wird besonders bevorzugt Polypropylen oder Polyethylen verwendet, und zwar ohne Lösungsmittel. Die Herstellung erfolgt so, daß vom Polyolefin eine Schmelze im Temperaturbereich von 150 bis 200°C hergestellt wird, zu der Holzmehl (Sägemehl) bis zu den genannten Volumenanteilen von 50 bis 80 % im entstehenden Produkt hinzugegeben wird. Es wird eine homogene Mischung erzeugt und die gewünschte Folie mit Stärken im Bereich von bevorzugt 0,5 mm bis 5 mm kann in herkömmlicher Weise extrudiert werden.

Die so erzeugte Folie 12 läßt sich dann gut und stabil mit einem Farbdekor versehen, wenn sie eine Temperatur im Bereich von 130°C bis 150°C hat.

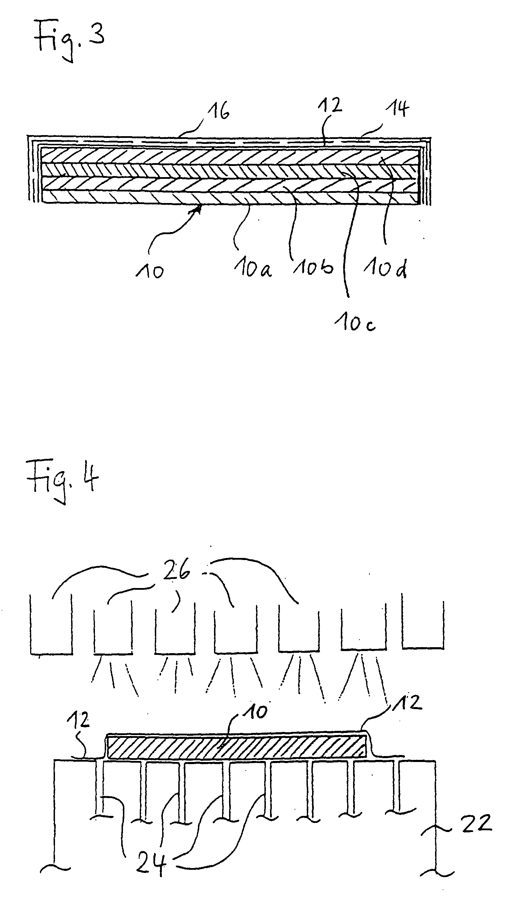

Figur 2 zeigt schematisch das Aufbringen eines Farbdekors 14 und einer Lackschicht 16 auf die Folie 12. Die Folie 12 hat z. B. eine Stärke S im genannten Bereich. Sie wird in Figur 2 von links nach rechts (vgl. den Pfeil) gefördert.

Auf einer Rolle 18 ist ein Träger mit "Release"-Eigenschaft aufgerollt, der auf seiner Außenseite mit einem Farbdekor 14 versehen ist. Da diese "Release"-Technik als solche bekannt ist, ist der Träger in den Figuren nicht näher dargestellt. Die Rolle 18 wird auf Temperaturen im genannten Bereich von 130 bis 150°C gehalten. Folie 12 und Drehgeschwindigkeit der Rolle 18 sind so aufeinander abgestimmt, daß das Farbdekor 14 paßgenau unter Druck auf die Folie 12 übertragen wird. Im weiteren Verlauf gelangt die Folie 12 zu der Walze 20, mit der eine Lackschicht 16 aufgetragen wird.

Die Farbdekorschicht 14 und die Lackschicht 16 werden so ausgewählt, daß sie thermisch verformbar sind.

Damit entsteht ein für sich handhabbares und handelbares Produkt in Form einer Folie 12 mit einer Beschichtung aus einem Farbdekor 14 und einer Lackschicht 16, die UV-gehärtet oder UV-härtbar ist.

Die Figuren 3 und 4 zeigen Ausführungsbeispiele für die Verwendung der Folie.

Fig. 3 zeigt einen Schnitt durch eine Treppenstufe, die mit der vorstehend beschriebenen Folie 12 beschichtet ist.

Der Körper 10 der Treppenstufe besteht bei diesem Ausführungsbeispiel aus mehreren Spanplatten 10a, 10b, 10c, 10d die horizontal übereinander geschichtet sind und jeweils mit einer Kleberschicht verbunden sind. Es können auch mehr als die dargestellten vier Spanplatten übereinander geschichtet werden.

Die Kleberschichten zwischen einzelnen Spanplatten können Faserverstärkt sein.

Insgesamt hat der Körper 10 die gewünschten Abmessungen der Treppenstufe, ist also z.B. vier bis sechs cm stark. Die Folie ist zur Verdeutlichung der Darstellung in ihrem Abmessungen (Stärken) stark vergrößert gezeichnet. Die Stärke S der Folie wird im wesentlichen durch die Lage aus Polyfin und Holzmehl bestimmt. Die Stärken der Farbdekorschicht und der Lackschicht sind vergleichsweise gering.

Figur 4 zeigt die Beschichtung eines Körpers 10 mit einer erfindungsgemäßen Folie 12, wobei die Folie 12 auf ihrer vom zu beschichtenden Körper abgekehrten Seite die Farbdekorschicht und die Lackschicht aufweist, wie oben beschrieben ist. In Figur 4 sind die Farb- und Lackschichten nicht gesondert dargestellt.

Der Körper 10 kann z. B. aus Holz oder einem Holzwerkstoff bestehen, insbesondere einer oder mehreren Spanplatten.

Der zu beschichtende Körper 10 wird auf einem Tisch 22 positioniert, in dem eine Vielzahl von Vakuum-Saugleitungen 34 ausgebildet sind. In den Leitungen 24 wird ein Unterdruck erzeugt (die hierzu erforderliche Vakuumpumpe ist nicht dargestellt). Die Folie 12 wird über den zu beschichtenden Körper 10 gelegt und unter Anwendung von Druck und erhöhter Temperatur aufgebracht. Das über die Saugleitungen 24 angelegte Vakuum erzeugt eine Druckdifferenz an der Folie.12, so daß die Folie rundum an den Körper 10, soweit dieser freiliegt, angepreßt wird. Zuvor und/oder gleichzeitig wird mit z. B. Infrarot-Heizstrahlern 26 die Folie 12 erwärmt.

Zur besseren Haftung zwischen Folie 12 und Körper 10 kann letzterer zuvor mit einem Schmelzkleber beschichtet sein.

Bevorzugt werden beim mit Bezugnahme auf Figur 4 beschriebenen Verfahren Folienstärken im Bereich von 1 bis 1 mm verwendet. Das so hergestellte Produkt ist gut "recyclebar". Es ist unter Verwendung der anhand der Figuren 1 und 2 beschriebenen Folie in einem einzigen Arbeitsgang fertig dekoriert und lackiert.

## Patentansprüche

1. Treppenstufe, aufweisend einen Körper (10) aus Holz oder einem Holzwerkstoff, **gekennzeichnet durch** eine Beschichtung mit einer Folie (12) aus im wesentlichen Holzmehl und Polyolefin.

2. Treppenstufe gemäß Anspruch 1,
**dadurch gekennzeichnet, daß** die Folie (12) 50 bis 80 Vol.-% Holzmehl und als Rest im wesentlichen ein Polyolefin aufweist.

3. Treppenstufe nach einem der Ansprüche 1 oder 2,
**dadurch gekennzeichnet, daß** das Polyolefin ein Polypropylen ist.

4. Treppenstufe nach einem der Ansprüche 1 oder 2,
wobei das Polyolefin ein Polyethylen ist.

5. Treppenstufe nach einem der vorhergehenden Ansprüche,
**dadurch gekennzeichnet, daß** die Folie (12) eine Beschichtung mit einem Farbdekor (14) aufweist.

6. Treppenstufe nach einem der vorhergehenden Ansprüche,
**dadurch gekennzeichnet, daß** eine Lackschicht (16) aufgetragen ist.

7. Treppenstufe nach Anspruch 6,
**dadurch gekennzeichnet, daß** die Lackschicht (16) UV-härtbar ist.

8. Treppenstufe nach einem der vorhergehenden Ansprüche,
**dadurch gekennzeichnet, daß** die Folie eine Stärke (S) im Bereich von 0,5 bis 5 mm hat.

9. Treppenstufe nach einem der vorhergehenden Ansprüche,
**dadurch gekennzeichnet, daß** der Körper (10) aus zwei oder mehr Lagen (10a, 10b, 10c, 10d) eines Holzwerkstoffes besteht, die durch eine Kleberschicht miteinander verbunden sind.

10. Treppenstufe nach Anspruch 9,
**dadurch gekennzeichnet, daß** die Lagen (10a, 10b, 10c, 10d) des Körpers (10) Spanplatten sind.

11. Treppenstufe nach einem der Ansprüche 9 oder 10,
**dadurch gekennzeichnet, daß** die Kleberschichten faserverstärkt sind, insbesondere mit Glasfasern.
